**Europäisches Patentamt**

**European Patent Office**

**Office européen des brevets**

(19)

(11) Numéro de publication: **0 182 687**
**B1**

(12)

# FASCICULE DE BREVET EUROPEEN

(45) Date de publication du fascicule du brevet:
**03.08.88**

(21) Numéro de dépôt: **85402050.0**

(22) Date de dépôt: **23.10.85**

(51) Int. Cl.⁴: **F 23 R 3/26**, F 23 R 3/10

(54) **Système d'injection à géométrie variable.**

(30) Priorité: **30.10.84 FR 8416536**

(43) Date de publication de la demande:
**28.05.86 Bulletin 86/22**

(45) Mention de la délivrance du brevet:
**03.08.88 Bulletin 88/31**

(84) Etats contractants désignés:
**DE FR GB**

(56) Documents cités:
**DE - A - 2 416 909**
**FR - A - 2 206 796**
**FR - A - 2 357 738**
**FR - A - 2 391 359**
**GB - A - 644 719**
**GB - A - 663 639**
**GB - A - 672 530**
**GB - A - 2 085 147**
**US - A - 3 490 230**
**US - A - 4 385 490**

(73) Titulaire: **SOCIETE NATIONALE D'ETUDE ET DE CONSTRUCTION DE MOTEURS D'AVIATION, "S.N.E.C.M.A.", 2 Boulevard Victor, F-75015 Paris (FR)**

(72) Inventeur: **Barbier, Gérard Yves Georges, 1, rue Louis Blériot, F-91420 Morangis (FR)**
Inventeur: **Bayle Laboure, Gérard Joseph Pascal, 7, bis rue Rémy Dumoncel, F-77210 - Avon (FR)**
Inventeur: **Bouillot, Pierre André Paul Résidence La Roseraie, Escalier F Rue G. Péri, F-91330 - Yerres (FR)**
Inventeur: **Desaulty, Michel André Albert, 2, rue de La Pierre Décollée, F-77240 - Vert Saint Denis (FR)**
Inventeur: **Martinez, Rodolphe, 14, chemin de L'Osier, F-94520 - Perigny S/Yerres (FR)**

(74) Mandataire: **Moinat, François, S.N.E.C.M.A. Service des Brevets Boîte Postale 81, F-91003 Evry Cédex (FR)**

## Description

L'invention concerne l'alimentation en carburant et en air primaire d'une chambre de combustion de turbomachine d'aviation.

Les chambres de combustion traditionnelles fonctionnent à des richesses nettement sous stoechiométriques. Pour assurer une stabilité et un rendement correct dans une large plage de fonctionnement les chambres sont divisées en 2 zones: une zone primaire alimentée par une fraction de débit d'air amont et qui se trouve à une richesse élevée; une zone de dilution dans laquelle est injecté le débit d'air amont restant, permettant à la fois de refroidir en moyenne les gaz chauds issus de la zone primaire et d'ajuster la répartition de température de sortie pour les rendre compatibles avec la tenue de la turbine.

Le choix de la fraction de débit d'air à injecter dans la zone primaire résulte d'un compromis entre les performances de la chambre au plein gaz: émission de fumées, tenue thermique des parois, répartition des températures, et les performances de la chambre en régime de ralenti: rendement, stabilité.

Cependant, suite à l'élargissement du domaine de fonctionnement des chambres imposé par les cycles des moteurs modernes, aux propositions de normes de pollution et aux études concernant la diversification des carburants, les possibilités de réaliser un compromis satisfaisant sur des chambres traditionelles deviennent limitées.

Une première solution a été trouvée dans l'adoption de chambres à deux modules dont l'un est adapté pour le régime ralenti et l'autre pour le régime plein gaz. Ces chambres développées essentiellement dans le cadre des études de pollution sont lourdes, coûteuses car elles nécessitent un plus grand nombre de points d'injection, et posent des problèmes de régulation aux régimes intermédiaires.

Une autre solution consiste à adapter de manière continue la répartition du débit d'air en fonction du régime, au moyen de volets mobiles capables de diaphragmer plus ou moins les entrées d'air de la chambre. Cette solution permettant une optimisation continue du fonctionnement de la chambre conduit à une réduction substantielle du volume de combustion donc de la masse et de l'encombrement.

Ainsi le brevet GB-A-663 639 cite, dans le cas d'un brûleur constituant la source chaude d'un échangeur air-gaz destiné à fournir de l'air à haute température à une installation à craquage ou une turbine industrielle, l'existence d'un volet à coulissement axial en combinaison avec une commande manuelle qui agit sur toutes les ouvertures d'entrée d'air de la chambre. Mais ce dispositif, outre le fait qu'il est appliqué manuellement à un domaine différent de celui de l'invention, ne permet absolument pas de moduler automatiquement et en permanence le mélange air-carburant selon des conditions de fonctionnement car dans une des positions du volet axial, l'entrée d'air dans la chambre est totalement empêchée ce qui amène obligatoirement à l'extinction complète de la combustion, résultat contraire aux objectifs visés par la présente invention.

L'invention a donc pour but la réalisation d'un système d'injection de carburant et d'air dont les entrées d'air sont à géométrie variable et elle concerne plus particulièrement les injecteurs aérodynamiques à bol du type correspondant à ceux décrits dans le brevet antérieur de la demanderesse FR-A-2 357 738 et son certificat d'addition FR-A-2 391 359.

De tels injecteurs comprennent en général des ailettes de tourbillonnement formant une vrille, par lesquelles l'air amont issu du compresseur est introduit, et servent à pulvériser le carburant pour obtenir un pré-mélange air-carburant. Selon l'enseignement du brevet précité ces injecteurs sont montés sur le fond de chambre avec interposition d'une pièce intermédiaire, appelée bol, comportant une partie tronconique évasée vers l'aval et percée d'une multiplicité de trous de faible diamètre par lesquels de l'air à forte pression pénètre dans le cône de carburant pulvérisé. Par les turbulences engendrées et le mélange intime réalisé, ce bol complète le rôle de l'injecteur; il agit par ailleurs sur la composition du mélange et permet la création d'une mini zone primaire au ralenti.

Le débit d'air passant à travers ce système d'injection, c'est-à-dire vrille plus orifices du bol, a été choisi dans un système installé pour être de l'ordre de 10%; comme cela à été expliqué plus haut, cette valeur résulte d'un compromis entre les débits d'air nécessaires pour obtenir des performances satisfaisantes au régime plein gaz au régime ralenti: respectivement 20% et 5 à 8%.

Le système proposé permet dans cet exemple de faire varier le débit dans la gamme 5% - 20% et donc de réaliser une optimisation constante du fonctionnement de la chambre en fonction du régime.

Conformément à l'invention le système d'injection étant constitué d'un injecteur de carburant, d'au moins une première vrille pour le passage d'air de pulvérisation, et d'un bol comportant une première rangée d'orifices d'injection d'air dans le cône de carburant pulvérisé et d'une seconde vrille pour le passage d'air de pulvérisation, concentrique à la première vrille, comprend un moyen mobile, commandant simultanément les débits d'air à-travers ladite vrille et ladite première rangée d'orifices de bol, et à travers ladite deuxième vrille.

Ainsi le moyen de commande agit également sur l'air de refroidissement du bol. En effet, la tenue thermique du système d'injection et notamment du bol est très sensible aux paramètres aérodynamiques et géométriques tels que l'angle du bol, le rapport des débits des vrilles, leur calage etc... Dans le cas de géométrie variable ces paramètres aérodynamiques ne restent pas constants et évoluent de telle sorte que le refroidissement par ruissellement du carburant sur les parois et simple soufflage sous la collerette du bol devient insuffisant au régime plein-gaz. Le dispositif selon l'invention permet donc de moduler le débit d'air de refroidissement en fonction du régime.

Dans un premier et un second mode de réalisation, les orifices de bol sont alimentés en partie par de l'air ayant circulé dans une chambre de refroidissement par convection ou impact le moyen de commande agissant alors sur la section d'entrée de cette chambre, dans un troisième mode de réalisation on agit de plus sur le débit de soufflage de la collerette.

La description qui suit en regard des dessins annexés, donnés à titre d'exemples non limitatifs permettra de comprendre les avantages de l'invention.

La figure 1 représente un système d'injection à géométrie variable selon une première mode de réalisation vu en coupe longitudinale,

la figure 2 est une vue en coupe selon la ligne II-II de la figure I, le système étant en configuration plein-gaz,

la figure 3 représente la même vue que la figure 2, en configuration de ralenti,

la figure 4 représente un système d'injection selon un deuxième mode de réalisation vu en coupe longitudinale,

la figure 5 est une vue en coupe selon V-V de la figure 4 en configuration plein-gaz,

la figure 6 représente un système d'injection selon un troisième mode de réalisation vu en coupe longitudinale,

la figure 7 est une vue en coupe selon VII-VII de la figure 6 en configuration plein-gaz,

la figure 8 représente un détail du système d'injection en configuration plein-gaz,

la figure 9 représente un détail du système d'injection en coupe longitudinale passant par les tubes longs, en configuration plein-gaz,

la figure 10 représente un détail du système d'injection en coupe longitudinale passant par les tubes courts, en configuration plein-gaz,

la figure 11 correspond à la figure 7 en configuration 35 de ralenti,

la figure 12 correspond à la figure 8 en configuration de ralenti,

la figure 13 correspond à la figure 10 en configuration de ralenti.

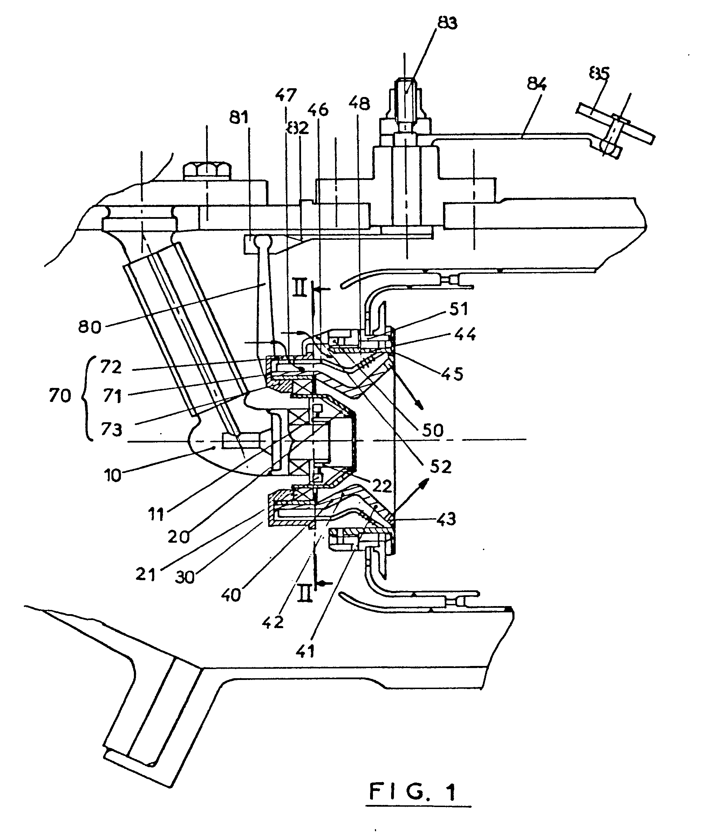

Sur la figure 1 est représentée l'extrémité amont d'une chambre de combustion pour turbomachine comportant le système d'injection selon un premier mode de réalisation de l'invention. Une fraction de l'air amont provenant du compresseur est guidée à travers le système d'injection pour la formation d'un mélange carburé; celui-ci passe dans la zone primaire où ont lieu les réactions de combustion, puis les gaz produits sont dilués et refroidis dans la zone secondaire aval, non représentée et sont distribués vers la turbine qu'ils entraînent.

Le système d'injection comprend un injecteur de carburant 20 à pulvérisation aérodynamique par exemple tel que décrit dans le brevet FR-A-2 206 796.

Cet injecteur comprend un corps central profilé 10 d'amenée du carburant prolongé vers l'aval par des ailettes de tourbillonnement à écoulement radial constituant une vrille centripète 11 interne; un chapeau annulaire 20 est pourvu d'un canal annulaire interne 21 alimenté en carburant par des canaux percés à l'intérieur des ailettes de la vrille 11, et débitant par une fente annulaire 22 dans le canal tubulaire du chapeau se raccordant à la vrille interne. Sur ce chapeau est monté une rangée d'ailettes externes constituant une vrille externe 30 à écoulement sensiblement axial. La nappe de carburant émergeant de la fente 22 est ainsi pulvérisée par effet de cisaillement entre le flux d'air mis en tourbillonnement par la vrille interne 11 et le flux d'air mis en tourbillonnement par la vrille externe 30. Cet injecteur vient se raccorder à la chambre de combustion par l'intermédiaire d'une pièce annulaire 40, nommée bol pour sa partie tronconique 41 évasée vers l'aval, le bol comporte aussi dans ce mode de réalisation une partie cylindrique concentrique à la vrille 30 et une partie tronconique 42 constituant avec le chapeau un canal annulaire pour le flux d'air tourbillonnant provenant de la vrille 30.

Vers son extrémité aval le bol comporte une rangée d'orifices 43 régulièrement répartis sur son pourtour, orientés vers l'axe de l'injecteur. Le bol est relié à la chambre par une jupe cylindrique 44 rapportée à son bord aval et comportant une collerette radiale 45 et un filetage pour permettre à un écrou 50 de venir enserrer avec la collerette une bague 51, brasée sur la paroi du fond de chambre de manière à définir l'orifice de passage du système d'injection. Une chemise 46 entoure à distance le bol 40.

Elle comporte une rangée d'ouvertures 47 à l'amont, réparties à sa périphérie; la partie de la chemise parallèle à la paroi 41 du bol est percée de multiples perforations 48 de faible diamètre permettant la formation de jets d'air assurant le refroissement de la paroi par impact.

Conformément à l'invention, ce système d'injection comprend un moyen 70 de commande de débit d'air. Il est constitué d'une bague 71 rotative, concentrique à l'injecteur, à section en L dont la grande branche, cylindrique est de diamètre intérieur égal au diamètre extérieur de la partie cylindrique amont de la chemise 46 et comporte des ouvertures 72 correspondant aux ouvertures 47; la petite branche du L est radiale, en appui contre le bord amont du bol; des ailettes 73 s'étendent depuis la bague radialement vers l'axe de l'injecteur, et correspondent en nombre et en section aux ailettes de la vrille externe 30. La bague est maintenue en position axiale au moyen d'au moins un doigt 52 solidaire de l'écrou 50 et coopérant avec une bride radiale externe de la bague.

La bague est actionnée à l'aide d'un levier 80 auquel elle est soudée; la tête du levier est prise dans une fourchette 81 d'un levier 82 monté sur un axe 83 tourillonnant dans un bossage solidaire du carter de la chambre. L'axe est lui-même relié par une biellette 84 à un anneau 85 de synchronisation commandant à l'unisson l'ensemble des systèmes d'injection de la chambre.

Le fonctionnement est assuré par un vérin, non représenté, ou tout autre moyen équivalent, qui fait tourner l'anneau autour de l'axe du moteur, lequel entraîne la biellette 84, l'axe 83, la biellette 82 et le levier 80; celui-ci fait tourner la bague 71 pour diaphragmer plus ou moins les ouvertures 47 et la vrille externe 30.

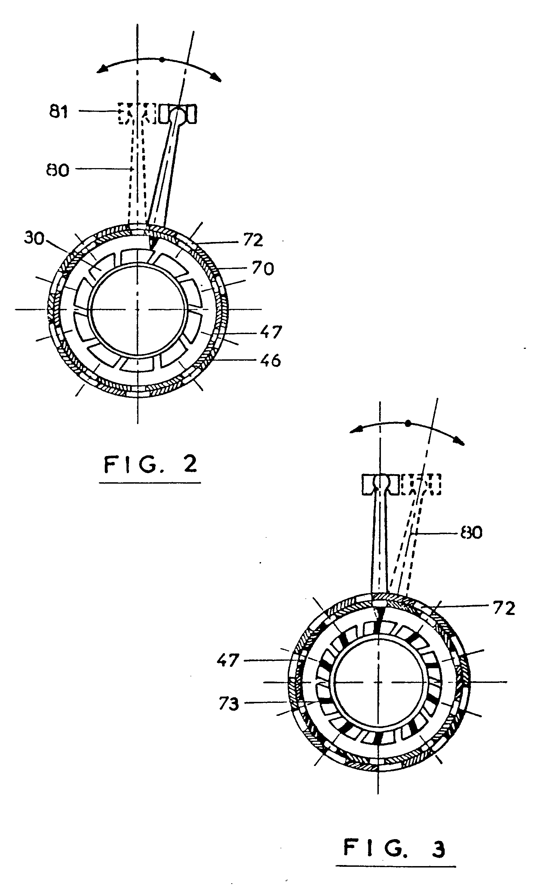

Les figures 2 et 3 montrent la bague dans deux positions extrêmes. La configuration plein-gaz est illustrée par la figure 2 où les orifices 47 et la vrille 30 sont à pleine ouverture permettant le passage d'un débit maximum d'air à travers le système d'injection c'est-à-dire les vrilles 11 et 30, et les orifices 43, soit par exemple 20% du débit d'air amont. L'air circulant entre la chemise et le bol en refroidit efficacement les parois par convection avant d'être injecté dans la chambre par la rangée d'orifices 43. Les multiperforations 48 garantissent, quel que soit le régime, un refroidissement par impact supplémentaire de la section tronconique du bol qui est la plus sollicitée thermiquement.

La configuration de régime de ralenti et de stabilité est illustrée par la figure 3 où les orifices 47 et la vrille 30 sont diaphragmées. L'ensemble des vrilles 11, 30 et des orifices 43 ne laissent plus passer que 5 à 8% du débit total de l'air amont. Le refroidissement du bol est alors assuré essentiellement par l'air d'impact.

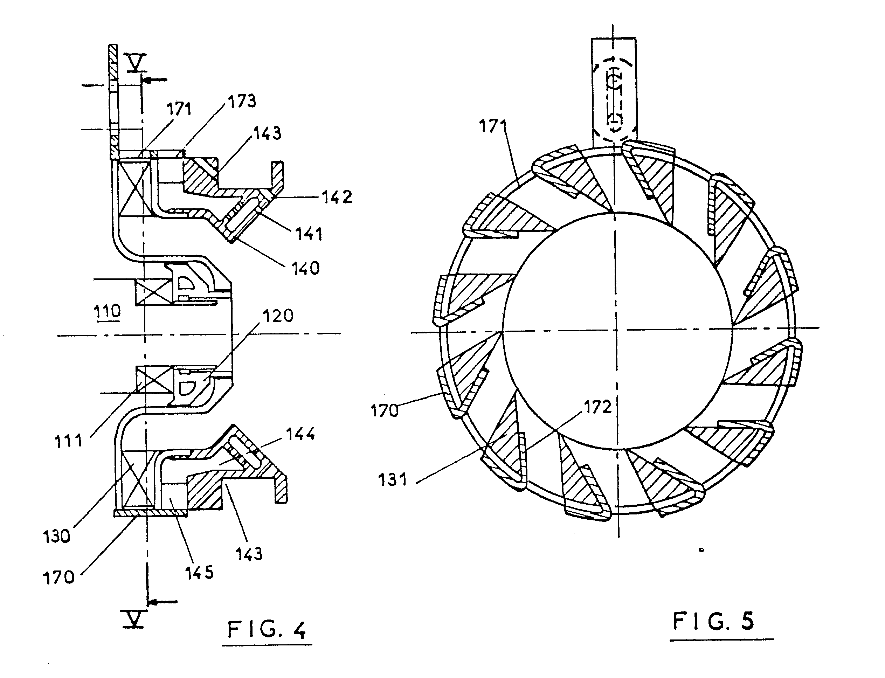

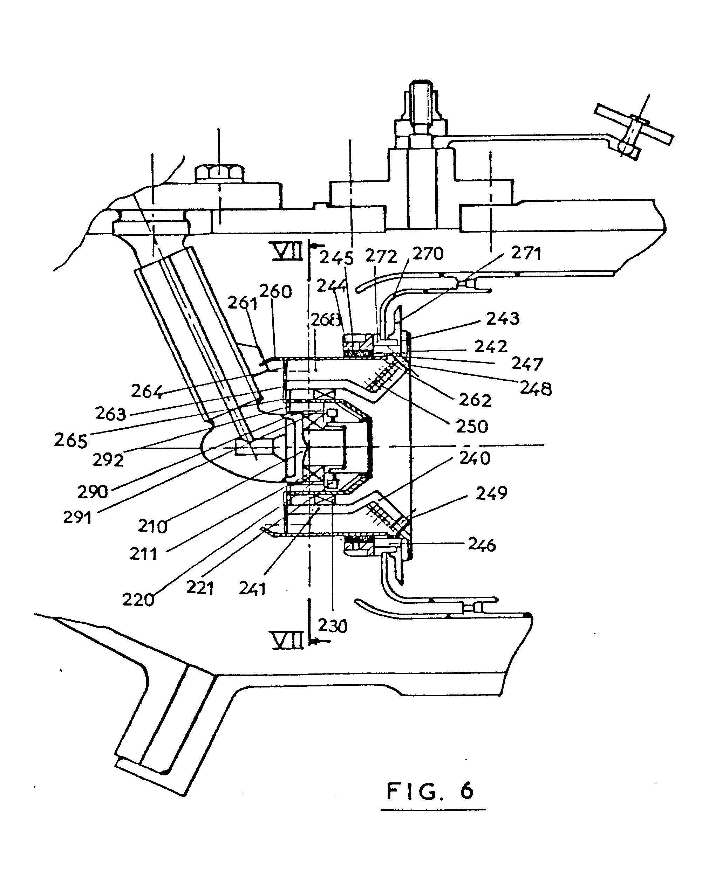

Les figures 4 et 5 représentent, non monté sur la chambre, un second mode de réalisation qui diffère du précédent par la disposition radiale de la vrille externe. Le tube d'injection et la vrille interne 111 sont les mêmes que précédemment, sur le chapeau 120 est donc montée une vrille externe 130 à écoulement centripète; les ailettes 131 de la vrille sont profilées de manière à délimiter entre elles des canaux à section constante. Sur cette vrille se raccorde le bol 140 qui est percé de deux rangées d'orifices d'injection d'air 141, 142 sur sa partie évasée; la jupe 143 délimite avec la paroi interne du bol et la vrille un espace annulaire 144 communiquant avec l'amont par une série d'orifices 145 adjacente à la vrille 130. Une tôle multi-perforée est montée dans l'espace 144 à distance du cône du bol. Le diaphragme du système est constitué par une bague 170 concentrique à la vrille 130 et le jupe du bol; elle comporte une première rangée d'ouvertures 171 correspondant aux canaux de la vrille, et des ailettes 172 s'étendant radialement à l'intérieur de ces canaux; une seconde rangée d'ouvertures 173 correspond aux orifices d'alimentation 145 de l'espace 144. La bague est actionnée par un mécanisme semblable au précédent ou tout autre équivalent.

Le fonctionnement du système est analogue au premier mode de réalisation. La bague peut tourner autour de son axe entre deux positions extrêmes. A la position de plein-gaz qui correspond à la figure 5, le système est tout ouvert, les ailettes 172 en appui contre les ailettes 131, l'air sortant de la vrille externe 130 est mis en accélération afin de supprimer les sillages résiduels et est injecté à l'entrée du bol où il participe au cisaillement de la nappe de carburant. Le bol est refroidi par l'air ayant traversé les orifices 145 ouverts et la tôle d'impact. Cet air est ensuite injecté par les orifices de bol 141 dans le volume de combustion.

Le débit important et la vitesse élevée obtenus dans ces conditions au niveau du système d'injection sont favorables aux performances de fumées, de tenue thermique et de carte de temperature.

Au ralenti et en stabilité, la vrille externe et les orifices 145 sont fortement diaphragmés. Le débit peut être réduit jusqu'à une valeur de l'ordre de 10% par rapport à la pleine ouverture. Les fonctions de pulvérisation et de contrôle de la répartition spatiale du carburant sont assurées alors par la vrille interne et par les orifices de bols alimentés en direct 142.

Les ailettes 172 assurent le guidage et la mise en vitesse de l'air à travers la vrille externe pour toutes les positions intermédiaires du diaphragme.

En comparant cette solution avec vrille externe radiale à la solution précédente, on constate que pour cette dernière, dans les conditions de plein-gaz, le diaphragme de la vrille externe se place devant les aubes de manière à supprimer son blocage propre. L'épaisseur des aubes est donc imposée par le taux de fermeture souhaité dans les conditions de ralenti. Or, l'augmentation des épaisseurs d'aubes entraîne un encombrement important du système et se traduit par une augmentation des risques de sillage dans le plan de sortie préjudiciables à la tenue thermique du bol à pleine charge. La deuxième solution évite ces problèmes car la géométrie de la vrille radiale externe permet de placer un diaphragme offrant des possibilités importantes de modulation du débit tout en conservant dans le plan de sortie une aérodynamique exempte de sillage.

La figure 6 représente un troisième mode de réalisation de l'invention. On reconnaît l'injecteur aérodynamique de carburant avec le corps central 210 d'amenée du carburant, la vrille centripète 211, le chapeau annulaire 220 pourvu du canal interne annulaire 221 débitant le carburant tangentiellement au flux d'air tourbillonnaire sortant axialement de la vrille interne. Le chapeau est emboîté dans un manchon pourvu d'ailettes radiales de tourbillonnement constituant la vrille externe 230. Le bol 240 reliant l'injecteur au fond de chambre est monté rotatif autour de l'injecteur; il comprend une partie cylindrique et cônique 241 constituant avec la vrille 230 le canal pour le flux d'air tourbillonnaire externe; éventuellement la vrille externe peut être solidaire du bol au lieu d'être fixe. La partie divergente du bol se termine par une collerette radiale 242, la face amont de la collerette comporte des pontets assurant un passage radial 243 avec la coupelle 271 du fond de chambre 270. Une jupe cylindrique 244 s'étend de la collerette vers l'amont et comporte un filetage pour permettre à un écrou 245 de venir enserrer, avec la collerette, une bague 272 traversant le fond de chambre 270 et brasée à sa paroi.

Cette bague ménage un espace annulaire 246 avec la jupe 244 qui comporte à son niveau une rangée d'ouvertures 247.

L'espace 246 communique avec la chambre par le passage radial 243 et par une rangée de tubes longs 248 débouchant dans le divergent du bol.

Un capotage 260 est emboîté dans la jupe, il est solidarisé en 261 au tube d'alimentation en carburant, il comporte en aval une rangée de trous 262 correspondant aux trous 247 de la jupe et en amont une plaque 263 interne, annulaire, transversale, en bout de la partie cylindrique 241 du bol; des ouvertures 264 dans la plaque font communiquer l'espace annulaire 268 entre le capotage et le bol avec l'amont, et des dents 265 diaphragment le passage de la vrille externe 230. L'espace annulaire 268 communique vers l'aval par les trous 262, 247 avec la chambre 246, par des tubes courts 249 débouchant dans le divergent du bol avec le volume de combustion et par les perforations d'une tôle d'impact 250 avec le passage radial 243. Cette tôle 250 est fixée à distance de la paroi du divergent et ménage un espace communiquant avec le passage 243.

Dans ce mode de réalisation, on prévoit un diaphragme, à la fois sur la vrille interne et sur la vrille externe. Une bague 290 est montée concentriquement à la vrille interne 211 elle comporte des ouvertures 291 correspondant en dimension et nombre aux passage radiaux de la vrille 211, elle est reliée à la partie cylindrique 241 du bol par des languettes 292 dimensionnées pour constituer avec les dents 265 un diaphragme de la vrille externe 230.

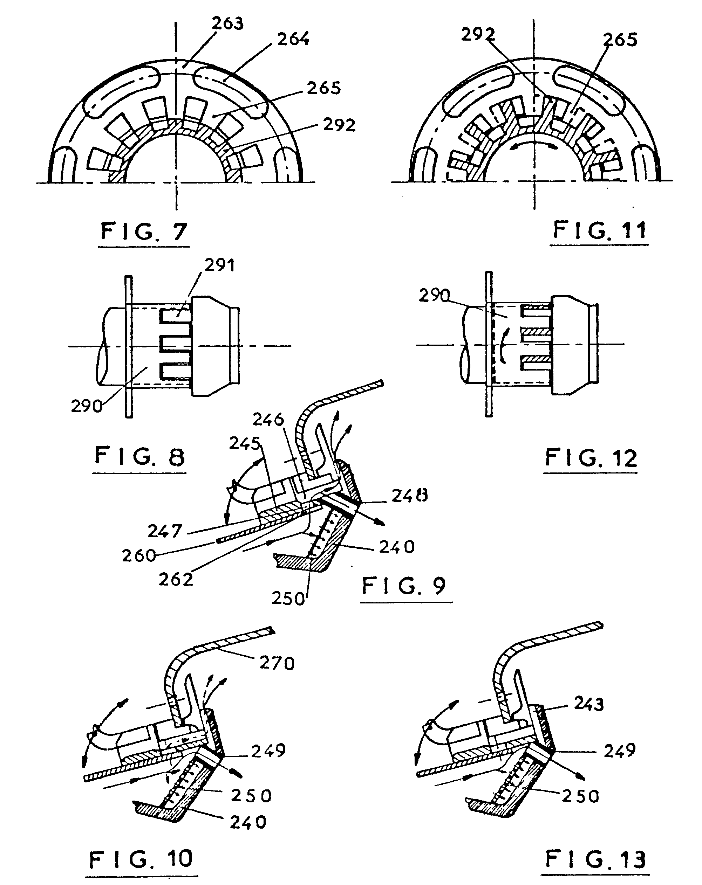

Les figures 7 à 13 représentant des détails de l'injecteur en position successivement de plein-gaz et de ralenti permettront de mieux en comprendre le fonctionnement.

Par un levier, non représenté, fixé à l'ecrou 245 on peut faire tourner autour de l'axe de l'injecteur l'équipage mobile constitué par la jupe 244, le bol 240, 241, les languettes 291 et la bague 290. En configuration plein-gaz où il s'agit de laisser passer un débit d'air maximum l'équipage mobile est alors dans la position où les orifices 262 coïncident avec les orifices 247, les languettes 292 sont masquées par les dents 265, figure 7, et les ouvertures 291 coïncident avec les passages de la vrille interne 211, figure 8. Dans cette configuration l'équipage n'induit aucune restriction à lécoulement. La fraction de l'air amont, provenant du compresseur, passant par le système d'injection se décompose en trois flux concentriques; le premier entre dans le passage 268 par les ouvertures 264; il alimente la chambre annulaire 246 par les orifices 247, 262, le refoidissement par impact du bol par les multiperforations de la tôle 250, figure 9, et la chambre de combustion par les tubes courts 249, figure 10. De la chambre 246, l'air s'échappe en majorité par les tubes longs 248 et est injecté dans la chambre de combustion, le reste s'écoule à travers le passage 243 pour assurer le soufflage de la collerette 242. Le passage 243 est également alimenté par l'air ayant traversé la tôle 240 et refroidi le bol par impact; grâce à ce double soufflage, on évite à la collerette, de façon efficace, la formation de points chauds préjudiciables à sa tenue mécanique. Les second et troisième flux passent respectivement à travers la vrille externe et la vrille interne où ils sont mis en rotation et participent à la pulvérisation du carburant comme dans les réalisations précédentes.

En configuration de ralenti, se reporter aux figures 11, 12 et 13, les orifices 247 et 262 ne coïncident plus; la chambre 246 n'est plus alimentée. Le soufflage de la collerette est diminué et l'injection d'air dans la chambre de combustion se réduit à celu injecté par les tubes courts 249, figure 13. Le passage à travers la vrille externe est diaphragmé par les languettes 292 décalées par rapport aux dents 265, figure 11. Le passage à travers la vrille est également diaphragmé par la bague 290, figure 12.

En résumé, dans ce mode de réalisation, on commande simultanément les deux passages d'air de pulverisation aérodynamique du carburant ainsi que les trous des bols tout en agissant sur le soufflage de la collerette.

D'autres variantes peuvent être envisagées. Ainsi par exemple dans les deux premiers modes de réalisation, il est possible d'envisager d'adjoindre un diaphragme à la vrille interne. Ou bien au lieu d'agir sur l'écoulement de la vrille externe, on peut diaphragmer la vrille interne seulement et l'on peut aussi diaphragmer le débit sous collerette. Enfin, au lieu de l'injecteur central de carburant tel que représenté, on peut envisager un injecteur mécanique.

## Revendications

1. Système d'injection d'air et de carburant dans une chambre de combustion de turbomachine d'aviation comprenant au moins un injecteur de carburant, au moins une première vrille pour le passage d'air de pulvérisation dudit carburant, un corps en forme de bol évasé dans le sens de l'écoulement pourvu d'une première rangée de trous de faible diamètre pour l'injection d'air dans le cône dudit carburant pulvérisé et une deuxième vrille pour le passage d'air de pulvérisation, concentrique à la première vrille, caractérisé en ce qu'il comporte un moyen commandant simultanément le débit d'air à travers ladite vrille (30, 130, 230) et ladite première rangée de trous (43, 141, 248) de bol en ce que ledit moyen commande également le débit d'air à travers ladite deuxième vrille.

2. Système d'injection selon la revendication 1 caractérisé en ce que la première vrille (130) est à entrée radiale et sortie axiale.

3. Système d'injection selon l'une des revendications 1 et 2 caractérisé en ce que le bol (40, 140) est entouré d'une chemise (46, 143) délimitant avec le bol une chambre alimentée en air par au moins un orifice (47, 145) dont l'ouverture est commandée par ledit moyen (71, 170) et communiquant avec la chambre de combustion par ladite rangée de trous (43, 141).

4. Système d'injection selon la revendication 3 caractérisé en ce que ledit moyen est constitué d'une bague (71) rotative comportant au moins un orifice (72) coopérant avec l'orifice (47) et des ailettes (73) coopérant avec les ailettes de la vrille (30).

5. Système d'injection selon la revendication 2 caractérisé en ce que la vrille (130) comporte un aubage (131) délimitant des canaux orientés radialement, de section constante.

6. Système d'injection selon les revendications 3 et 5 caractérisé en ce que ledit moyen est constitué par une bague (170) rotative comportant au moins un orifice (171) coopérant avec lesdits canaux et un orifice (173) coopérant avec l'orifice (145).

7. Système d'injection selon la revendication 6 caractérisé en ce que la bague (170) comporte des ailettes (172) de guidage de l'air dans les canaux de la vrille (130).

8. Système d'injection selon la revendication 1 caractérisé en ce que ledit moyen est constitué par un diaphragme (290-292) commandant le passage à travers au moins la première vrille (230), et par le bol (240) lui-même auquel le diaphragme est assujetti, le bol étant mobile en rotation pour commander le passage à travers la première rangée (248) de trous d'injection.

9. Système d'injection selon la revendication 8 caractérisé en ce que le bol (240) comporte une collerette radiale (242) rapportée à son plus grand diamétre, definissant avec le fond de la chambre un passage (243) d'air de soufflage, la rotation du bol commandant le débit d'air à travers ledit passage (243).

## Patentansprüche

1. System zum Einspritzen von Luft und Kraftstoff in die Brennkammer einer Turbomaschine für Luftfahrzeuge mit wenigstens einer Kraftstoffeinspritzdüse, mit wenigstens einem ersten Verwirbler für den Durchtritt von Luft zum Zerstäuben des Kraftstoffs, mit einem Körper in Form einer Schale, der sich in Strömungsrichtung trichterförmig erweitert und eine erste Reihe von Löchern mit kleinem Durchmesser zum Einspritzen von Luft in den Kegel des zerstäubten Kraftstoffs aufweist, sowie mit einem konzentrisch zu dem ersten Verwirbler angeordneten zweiten Verwirbler für den Durchtritt von Zerstäubungsluft, dadurch gekennzeichnet, dass ein Steuerungsmittel vorgesehen ist, das gleichzeitig den Luftdurchsatz durch den ersten Verwirbler (30, 130, 1230) und durch die erste Reihe von Einspritzlöchern (43, 141, 248) der Schale steuert, und dass dieses Steuerungsmittel ausserdem den Durchsatz durch den zweiten Verwirbler steuert.

2. Einspritzsystem nach Anspruch 1, dadurch gekennzeichnet, dass der erste Verwirbler (130) einen radialen Einlass und einen axialen Auslass besitzt.

3. Einspritzsystem nach Anspruch 1 oder 2, dadurch gekennzeichnet, dass die Schale (40,140) von einem Mantel (46,143) umgeben ist, der zusammen mit ihr eine Kammer begrenzt, die durch wenigstens eine Öffnung (47,145) mit Luft gespeist wird, die über die genannte Reihe von Einspritzlöchern (43, 141) mit der Brennkammer in Verbindung steht und deren Einlassgrösse durch das genannte Steuerungsmittel (71, 170) steuerbar ist.

4. Einspritzsystem nach Anspruch 3, dadurch gekennzeichnet, dass das Steuerungsmittel von einem drehbaren Ring (71) gebildet ist, der wenigstens eine Öffnung (72) besitzt, die mit der genannten Öffnung (47) sowie mit Rippen (73) zusammenwirkt, die ihrerseits mit den Rippen des ersten Verwirblers (30) zusammenwirken.

5. Einspritzsystem nach Anspruch 2, dadurch gekennzeichnet, dass der erste Verwirbler (130) Schaufeln (131) aufweist, die radial gerichtete Kanäle mit konstantem Querschnitt begrenzen.

6. Einspritzsystem nach Anspruch 3 und 5, dadurch gekennzeichnet, dass das Steuerungsmittel von einem drehbaren Ring (170) gebildet ist, der wenigstens eine Öffnung (171) besitzt, die mit den genannten Kanälen sowie mit einer mit der Öffnung (145) zusammernwirkenden Öffnung (173) zusammenwirkt.

7. Einspritzsystem nach Anspruch 6, dadurch gekennzeichnet, dass der Ring (170) Stege (172) zur Führung der Luft in die Kanäle des Verwirblers (130) aufweist.

8. Einspritzsystem nach Anspruch 1, dadurch gekennzeichnet, dass das Steuerungsmittel von einer den Duchgang durch wenistens den ersten Verwirbler (230) bestimmenden Blende (290-292) und die Schale (240) selbst gebildet ist, an welchem die Blende befestigt ist, wobei die Schale sich zur Regelung des Durchgangs durch die erste Reihe von Einspritzlöchern (248) drehen lässt.

9. Einspritzsystem nach Anspruch 8, dadurch gekennzeichnet, dass die Schale (240) einen radialen Bund (242) aufweist, der an ihrem grössten Durchmesser angebracht ist und mit dem Boden der Kammer einen Durchtritt (243) für Blasluft definiert, wobei die Drehung der Schale den Luftdurchsatz durch den Durchtritt (243) steuert.

## Claims

1. System for injecting air and fuel into a turbine aero engine combustion chamber comprising at least one fuel injector, at least a first spiral for the passage of air for atomizing the said fuel, a body in the shape of a bowl widened in the direction of flow provided with a first row of holes of small diameter for the injection of air into the cone of the said atomized fuel and a second spiral for the passage of atomizing air, which is concentric with the first spiral, characterized in that is has a means controlling simultaneously the flow rate of air across the said spiral (30, 130, 230) and the said first row of bowl holes (43, 141, 248) and in that the said means also controls the flow rate of air across the said second spiral.

2. Injection system according to Claim 1, characterized in that the first spiral (130) has a radial inlet and an axial outlet.

3. Injection system according to either of Claims 1 and 2, characterized in that the bowl (40,140) is surrounded by a casing (46, 143) delimiting with the bowl a chamber fed with air by means of at least one orifice (47, 145), the opening of which is controlled by the said means (71, 170), and which communicates with the combustion chamber by means of the said row of holes (43, 141).

4. Injection system according to Claim 3, characterized in that the said means is composed of a rotating ring (71) having at least one orifice (72) cooperating with the orifice (47) and fins (73) cooperating with the fins of the spiral (30).

5. Injection system according to Claim 2, characterized in that the spiral (130) has a blade (131) delimiting radially oriented channels of constant cross section.

6. Injection system according to Claims 3 and 5, characterized in that the said means is composed of a rotating ring (170) having at least one orifice (171) cooperating with the orifice (145).

7. Injection system according to Claim 6, characterized in that the ring (170) has fins (172) for guiding air in the channels of the spiral (130).

8. Injection system according to Claim 1, characterized in that the said means is composed of a diaphragm (290-292) controlling the passage across at least the first spiral (230), and of the bowl being movable in rotation to control the passage across the first row (248) of injection holes.

9. Injection system according to Claim 8, characterized in that the bowl (240) has a radial flange (242) which matches its largest diameter, defining with the bottom of the chamber a passage (243) for blown air, the rotation of the bowl controlling the flow rate of air across the said passage (243).

FIG. 1

F I G.  2

F I G.  3

FIG. 5

FIG. 4

FIG. 6

FIG. 7

FIG. 11

FIG. 8

FIG. 12

FIG. 9

FIG. 10

FIG. 13